# EUROPEAN PATENT SPECIFICATION

(11) **EP 2 071 815 B1**
(45) Date of publication and mention of the grant of the patent: **30.06.2010**
(21) Application number: 07291509.3
(22) Date of filing: 12.12.2007
(51) Int. Cl.: H04M 3/18, H02H 9/06, H04M 11/06

(54) **Protection for xDSL circuits**
Schutz für xDSL-Schaltungen
Protection pour circuits xDSL

(43) Date of publication of application: 17.06.2009
(73) Proprietor: Alcatel Lucent, 75008 Paris (FR)
(72) Inventor: van den Berg, Eric, 2560 Nijlen (BE)
(74) Representative: Narmon, Gisèle Marie Thérèse

(56) References cited:
- US-A1- 2003 112 572
- US-A1- 2004 252 436

## Description

The present invention relates to a Digital Subscriber Line DSL protection circuit comprising a transformer having line-side winding part coupled to a telecommunication line and having opposite chip-side winding part, said chip-side winding part having chip winding terminals coupled to distinct inputs of a line driver device, and said protection circuit further comprising a clamping device coupled between said terminals.

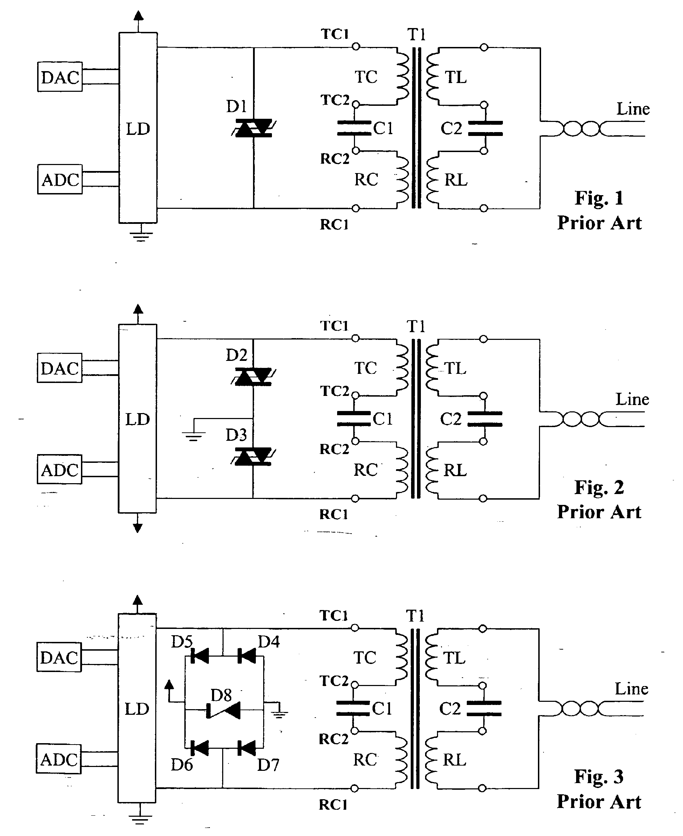

Such a protection circuit is already known in the field of DSL Digital Subscriber telecommunication Lines. Possible protection circuits are shown at the Figs. 1 to 3.

In these known protection circuits, the chip-side winding part of the transformer is constituted by two distinct winding serially coupled through a capacitor C1.

In the known protection circuit shown at Fig. 1, a single clamping device D1 is provided between the chip winding terminals TC1 and RC1. This known circuit does not provide common mode protection, whereby the capacitor C1 needs also to be medium high voltage (50 to 200V). This capacitor is therefore either expensive and relatively space consuming in case of a Surface Mount Device SMD, or very space consuming in case of a Through Hole device. It is further to be noted that a large SMD capacitor C1 in the smallest possible case is also less reliable.

At Fig. 2, a more expensive and space consuming known protection circuit is shown. Therein, two serially connected clamping devices D2 and D3 are used, with their junction point connected to the ground. However, the capacitor C1 still needs to be medium high voltage. Moreover, the clamping devices D2 and D3 may not trip at the same time, which will result in less predictable behavior and higher discharge of energy into the ground plane causing more cross talk to neighboring lines.

At Fig. 3, a diode bridge consisting of diodes D4, D5, D6 and D7 is used to clamp the Line Driver terminals to the Line Driver's supply line in the event of a surge. Such a diode bridge often contains a Zener diode D8 to avoid that the surge continues on the supply lines. This circuit provides protection against both differential and longitudinal or common mode surges on the Line.

An even more expensive and space consuming known protection circuit may consist of any combination of the circuits shown at the Figs. 1 through 3.

The block identified by LD in Figs. 1 through 6 actually consists of more than only a line driver device. Inside this block, an amplifier generating the transmitted signal is enclosed. The output current of this amplifier is measured across sense resistors and used as a feed back signal to the line driver device. Due to the continuous strive for higher efficiency and lower power losses, these sense resistors have reduced in value. However, the lower value of these sense resistors makes the line driver device more vulnerable for transients on external lines.

To effectively protect the line driver device LD if low value sense resistors are used, it often becomes necessary to provide several protection devices in parallel. A first protection circuit can be fast acting, but typically fast acting protection devices have a fairly high internal resistance. This high resistance still causes that fairly high transient voltages are still seen at the Line Driver terminals. A second protection circuit of a more robust type is therefore provided with lower internal resistance. However, the robust protector is usually too slow to protect the line driver from fast rising transients.

An object of the present invention is to provide a protection circuit of the above known type but which is relatively cheaper, less space consuming and, most important, reduces the current through the Electrostatic Discharge ESD protection diodes at the line driver devices outputs in the event of a surge.

According to the invention, this object is achieved due to the fact that said chip winding terminals are coupled to the distinct inputs of said line driver device via a distinct capacitor.

In this way, by using only a single clamping device and two relatively small capacitors, a transient surge can be suppressed directly at the source, i.e. at the transformer, while providing a relatively cheap and few space consuming protection circuit.

Another characterizing embodiment of the present invention is that the chip-side winding part of said transformer comprises a tip chip winding and a ring chip winding, each of said chip windings having a first terminal coupled to a distinct input of said line driver device via said distinct capacitors, and having a second terminal, and that the second terminals of said chip windings are interconnected at a common junction point.

This allows reusing available transformers as of the prior art protection circuits shown at the Figs. 1 to 3. These transformers have two chip windings and the capacitor C1 previously connected in series between these windings is simply removed while the second terminals are shorted.

In a preferred characterizing embodiment of the present invention, the common junction point of the interconnected second terminals of said chip windings is connected to the ground via a second clamping device.

The second clamping device may be a lower power clamping device, whilst the first one is more robust. This preferred embodiment provides also a better protection against common mode surges.

Further characterizing embodiments of the present protection circuit are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only: Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Figs. 1 to 3 show protection circuits known from the prior art as discussed above;
Fig. 4 shows a protection circuit according to the invention and based on items used in the prior art;
Fig. 5 shows a variant protection circuit still according to the invention; and
Fig. 6 shows a preferred embodiment of the protection circuit of Fig. 4.

The present invention is of interest in electronic telecommunication systems where amplifiers are transformer coupled to external interfaces. These external interfaces can be subjected to transients caused by power contact, lightning or other sources. A protection circuit must be in place to protect the amplifier from being damaged by these external transients.

Referring to the Figs. 1 through 6, amongst which Figs. 1 to 3 show prior art protection circuits, the amplifier is hereafter generally named Line Driver Device LD, whilst the external interface, which can be subjected to surges, is named Line. The Line is transformer coupled to the Line Driver Device LD. In a typical xDSL circuit, the voice or ISDN signals are filtered by a High Pass Filter in order to avoid that these signals reach the Analog to Digital Converter denoted by ADC in the Figs. 1 through 6.

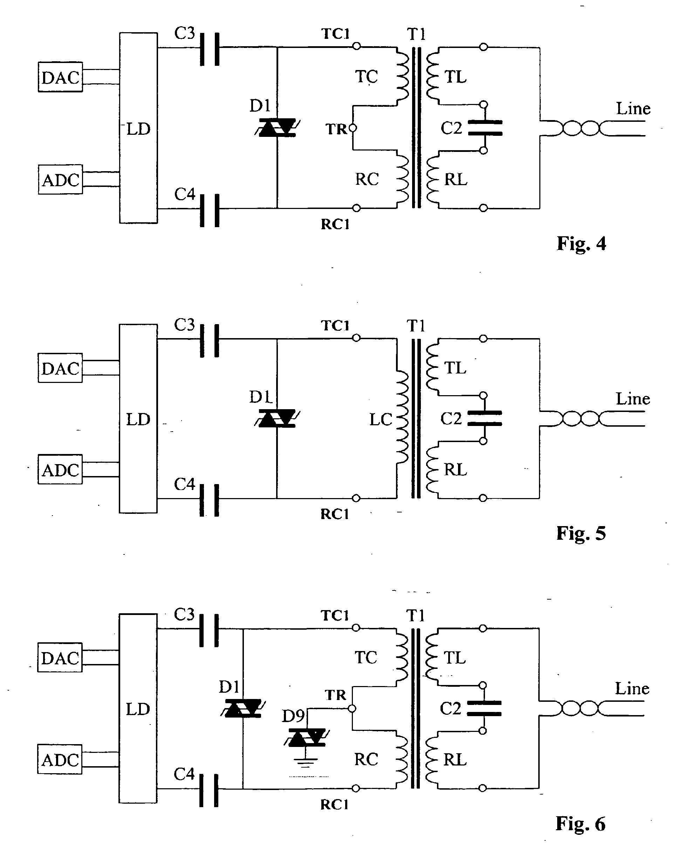

In the Figs. 1 through 3, representing prior art, a transformer T1, together with capacitors C1 and C2 are part of this High Pass Filter. In the Figs. 4 through 6 of the present invention, the transformer T1, together with capacitors C3 and C4 provide a high pass filter with the same filter characteristics.

In more detail, the telecommunication devices shown at the Figs. 4 to 6 all include a protection circuit for Digital Subscriber telecommunication Lines DSL, and more generally xDSL, according to the invention. A fundamental architecture of the protection circuit is shown at Fig. 5, a preferred embodiment at Fig. 6 and a circuit allowing reusing a transformer currently available for such circuits is shown at Fig. 4.

In all these possible variants, the protection circuit is placed between the telecommunication Line and the line driver device LD preferably comprising a hybrid and line drivers. The line driver device LD is further coupled to Digital-to-Analog Converter DAC and Analog-to-Digital Converter ADC.

The Digital Subscriber Line DSL protection circuit thus comprises the transformer T1 having line-side winding part TL, RL coupled to the telecommunication Line and having opposite chip-side winding part TC, RC (in the Figs. 1-4 and 6), LC (in Fig. 5). The chip-side winding part comprises a first chip winding terminal TC1 coupled to a first input of the line driver device LD via a first capacitor C3, and a second chip winding terminal RC1 coupled to a second input of the line driver device LD via a second capacitor C4. The protection circuit further comprises a clamping device D1 coupled between the terminals TCA and RC1.

Referring to the Figs. 4 and 6, the chip-side winding part TC, RC; LC of the transformer T1 comprises a tip chip winding TC and a ring chip winding RC. Each of these chip windings has a first terminal TC1, RC1 coupled to a distinct input of the line driver device LD via the capacitor C3, C4 respectively, and has a common second terminal TR. In other words, the second terminals of the two chip windings are interconnected at a common junction point TR.

In the preferred embodiment shown at Fig. 6, the common junction point TR is connected to the ground via a second clamping device D9.

In the Figs. 4 and 6, a transformer T1 as known from the prior art (Figs. 1-3) with two chip windings can be reused, the two chip windings being interconnected at the common junction point TR. In the variant shown at Fig. 5, the transformer T1 is designed to have only one single chip winding LC.

The line-side windings TL, RL of the transformer T1 of all the protections circuits shown in the Figs. 1 through 6, comprise a tip line winding TL and a ring line winding RL. Each of these two line windings has a first terminal coupled to a distinct wire of said telecommunication Line, and has a second terminal. The second terminal of the tip line winding is coupled to the second terminal of the ring line winding via a line capacitor C2.

Note that in the shown topologies an electronic component designed to protect electronic circuits against overvoltage, generally known as Trisil, has been drawn as protection device D1-D3, D9. In reality, a wide range of clamping or crowbar type of devices may be used. Unlike a Transil, the Trisil acts as a crowbar device, switching on when the voltage on it exceeds its breakover voltage.

By moving the DC-blocking capacitor C1 (of the prior circuits shown at the Figs. 1-3) from the center of the transformer and putting it between each leg of the transformer T1 and the hybrid LD, the transient surge can be suppressed directly at the source (i.e. the transformer) with just a single protection device D1.

Capacitors C3 and C4 now form an additional series impedance between the protection device and the line driver device. Therefore, a protection device can be selected that provides a good balance between speed of operation and internal series resistance. The higher surge voltages seen across these protectors, compared to the combination of a fast acting and a robust protector, does not cause higher and sustained currents through the line driver's ESD Electrostatic Discharge protection diodes due to the presence of the additional inductance caused by the capacitors C3 and C4.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A Digital Subscriber Line DSL protection circuit comprising a transformer (T1) having line-side winding part (TL, RL) coupled to a telecommunication line and having opposite chip-side winding part (TC, RC; LC), said chip-side winding part having chip winding terminals (TC1, RC1) coupled to distinct inputs of a line driver device (LD), and said protection circuit further comprising a clamping device (D1) coupled between said terminals,
***characterized in that*** said chip winding terminals (TC1, RC1) are coupled to the distinct inputs of said line driver device (LD) via a distinct capacitor (C3, C4).

2. The protection circuit according to claim 1,
***characterized in that*** the chip-side winding part (TC, RC; LC) of said transformer (T1) comprises a tip chip winding (TC) and a ring chip winding (RC), each of said chip windings having a first terminal (TC1, RC1) coupled to a distinct input of said line driver device (LD) via said distinct capacitors (C3, C4), and having a second terminal,
***and in that*** the second terminals of said chip windings are interconnected at a common junction point (TR).

3. The protection circuit according to claim 2, ***characterized in that*** the common junction point (TR) of the interconnected second terminals (TC2, RC2) of said chip windings is connected to the ground via a second clamping device (D9).

4. The protection circuit according to claim 1, ***characterized in that*** the line-side windings (TL, RL) of said transformer (T1) comprise a tip line winding (TL) and a ring line winding (RL), each of said line windings having a first terminal coupled to a distinct wire of said telecommunication line, and having a second terminal, the second terminals of said tip line winding being coupled to the second terminal of said ring line winding via a line capacitor (C2).

## Patentansprüche

1. Schutzschaltung für eine digitale Teilnehmeranschlussleitung DSL, umfassend einen Transformator (T1) mit einem an eine Telekommunikationsleitung gekoppelten leitungsseitigen Wicklungsteil (TL, RL) und einem gegenüberliegenden chipseitigen Wicklungsteil (TC, RC; LC), wobei der besagte chipseitige Wicklungsteil Chip-Wicklungsanschlüsse (TC1, RC1) aufweist, welche an unterschiedliche Eingänge einer Leitungstreibervorrichtung (LD) gekoppelt sind, und wobei die besagte Schutzschaltung weiterhin eine Klemmvorrichtung (D1) umfasst, welche zwischen den besagten Anschlüssen gekoppelt ist,
***dadurch gekennzeichnet, dass*** die besagten Chip-Wicklungsanschlüsse (TC1, RC1) über einen unterschiedlichen Kondensator (C3, C4) an die unterschiedlichen Eingänge der besagten Leitungstreibervorrichtung (LD) gekoppelt sind.

2. Die Schutzschaltung nach Anspruch 1,
***dadurch gekennzeichnet, dass*** der chipseitige Wicklungsteil (TC, RC; LC) des besagten Transformators (T1) eine Chip-Kopfwicklung (TC) und eine Chip-Ringwicklung (RC) umfasst, wobei eine jede der besagten Chip-Wicklungen einen ersten Anschluss (TC1, RC1), welcher über die besagten unterschiedlichen Kondensatoren (C3, C4) an einen unterschiedlichen Eingang der besagten Leitungstreibervorrichtung (LD) gekoppelt ist, und einen zweiten Anschluss aufweist,
***und dass*** die zweiten Anschlüsse der besagten Chip-Wicklungen an einem gemeinsamen Knotenpunkt (TR) miteinander verbunden sind.

3. Die Schutzschaltung nach Anspruch 2, ***dadurch gekennzeichnet, dass*** der gemeinsame Knotenpunkt (TR) der miteinander verbundenen zweiten Anschlüsse (TC2, RC2) der besagten Chip-Wicklungen über eine zweite Klemmvorrichtung (D9) an die Erde angeschlossen wird.

4. Die Schutzschaltung nach Anspruch 1, ***dadurch gekennzeichnet, dass*** die leitungsseitigen Wicklungsteile (TL, RL) des besagten Transformators (T1) eine Leitungs-Kopfwicklung (TL) und eine Leitungs-Ringwicklung (RL) umfassen, wobei eine jede der besagten Leitungswicklungen einen ersten Anschluss, welcher an einen unterschiedlichen Draht der besagten Telekommunikationsleitung gekoppelt ist, und einen zweiten Anschluss aufweist, wobei die zweiten Anschlüsse der Leitungs-Kopfwicklung über einen Leitungskondensator (C2) an den zweiten Anschluss der besagten Leitungs-Ringwicklung gekoppelt sind.

## Revendications

1. Circuit de protection de ligne d'abonné numérique DSL, comprenant un transformateur (T1) ayant une partie de bobinage côté ligne (TL, RL) couplée à une ligne de télécommunication et ayant une partie de bobinage côté puce (TC, RC ; LC), ladite partie de bobinage côté puce ayant des terminaux de bobinage de puce (TC1, RC1) couplés à des entrées distinctes d'un dispositif de commande de ligne (LD), et ledit circuit de protection comprenant en outre un dispositif de serrage (D1) couplé entre lesdits terminaux,
***caractérisé en ce que*** lesdits terminaux de bobinage de puce (TC1, RC1) sont couplés aux entrées distinctes dudit dispositif de commande de ligne (LD) via un condensateur distinct (C3, C4).

2. Circuit de protection selon la revendication 1,
***caractérisé en ce que*** la partie de bobinage côté puce (TC, RC ; LC) dudit transformateur (T1) comprend un bobinage de puce en pointe (TC) et un bobinage de puce en anneau (RC), chacun desdits bobinages de puce ayant un premier terminal (TC1, RC1) couplé à une entrée distincte dudit dispositif de commande de ligne (LD) via lesdits condensateurs distincts (C3, C4), et ayant un second terminal,
***et en ce que*** les seconds terminaux desdits bobinages de puce sont interconnectés en un point de jonction commun (TR).

3. Circuit de protection selon la revendication 2, ***caractérisé en ce que*** le point de jonction commun (TR) des seconds terminaux interconnectés (TC2, RC2) desdits bobinages de puce est connecté à la masse via un second dispositif de serrage (D9).

4. Circuit de protection selon la revendication 1, ***caractérisé en ce que*** les bobinages côté ligne (TL, RL) dudit transformateur (T1) comprennent un bobinage de ligne en pointe (TL) et un bobinage de ligne en anneau (RL), chacun desdits bobinages de ligne ayant un premier terminal couplé à un fil distinct de ladite ligne de télécommunication et ayant un second terminal, les seconds terminaux dudit bobinage de ligne en pointe étant couplés au second terminal dudit bobinage de ligne en anneau via un condensateur de ligne (C2).
